# EUROPEAN PATENT APPLICATION

(11) **EP 4 567 659 A1**
(43) Date of publication of application: **11.06.2025**
(21) Application number: 24184511.4
(22) Date of filing: 26.06.2024
(51) Int. Cl.: G06F 40/174, G06F 11/3668

(54) **SYSTEM AND METHOD FOR LARGE LANGUAGE MODEL BASED AUTOMATED TEST INPUT GENERATION FOR WEB APPLICATIONS**

(30) Priority: 01.08.2023 IN 202321051754
(71) Applicant: Tata Consultancy Services Limited, Maharashtra (IN)
(72) Inventor: AGRAWAL, SUPRIYA, 411028 Pune (IN); KARMARKAR, HRISHIKESH, 400076 Mumbai (IN); CHAUHAN, AVRITI, 411028 Pune (IN); SHETE, PRANAV GAURISHANKAR, 411057 Pune (IN); ARORA, NISHTHA, 411057 Pune (IN); AGRAWAL, PANKAJ SHAMLAL, 411057 Pune (IN)
(74) Representative: Goddar, Heinz J.

(57) **Abstract**

Existing techniques for automated generation of test data for testing web applications need detailed requirement documents. The present disclosure receives a plurality of textual documents to extract context. Rephrasing the extracted context by implementing a plurality of rules and passing extracted context along with a first set of prompts to Large Language Model (LLM). Generating program, validator and first set of constraints for extracted context and generating test data by running the generated program. Assigning ranking to test data and selecting the test data with highest ranking. Statically refining the generated program by calling a mathematical library function on the highest ranked test data to generate structural information and modifying language of the second set of prompts passed to the LLM. Dynamically refining the generated program by passing feedback generated by executing the highest ranked test data on a web application and refining the response obtained.

## Description

### CROSS-REFERENCE TO RELATED APPLICATIONS AND PRIORITY

The present application claims priority to Indian application no. 202321051754, filed on August 01, 2023.

### TECHNICAL FIELD

The disclosure herein generally relates to the field of automated test data generation, and, more particularly, to a system and method for large language model based automated test input generation for web applications.

### BACKGROUND

Web applications are prevalent and considered the mainstay of information systems for organizations. At the same time, web applications are getting more complex, costly for development, and testing. Employees, customers, and/or business partners rely on these information systems to accomplish their business processes and tasks. Accordingly, users of these web applications assume that these systems are error-free and reliable. Automation testing is imperative to assure regression testing, off-load repetitive tasks from test engineers, and keep the pace between test engineers and developers.

Automated test data generation is a technique to create different tests in an automated fashion, apply them and then record and summarize the collected data. Current approaches including functional test generation and structural test generation need detailed requirement documents and code respectively, without which these approaches cannot be applied. Further, only technique that can be applied with minimum information, is either random generation or Large Language Model (LLM) based approach. Random generation may work in trivial cases, but it produces a lot of infeasible data for complex application. Web applications are often complex with multiple screens and random generation fails to even reach many internal screens. Current Large Language Model (LLM) based approach also produce a lot of vague and incorrect data, which makes it very difficult to ensure coverage.

The test data can be created through requirements, code, or similar inputs. Functional test case generation deals with capturing the requirements in formal languages and applying techniques to generate data from these formal notations. Some examples of such techniques include Random Test case Generation (RTG), Model-Based Testing (MBT) and Expressive Decision Tables (EDT) based testing (EBT). But these techniques cannot work in absence of good requirement documents, which are very rarely available. Structural testing is basically related to the internal design and implementation of the software. Structural test case generation takes code as an input and try to generate test cases by applying methods like path coverage or Modified Condition Decision Coverage (MCDC). But it is very difficult to get full access to code and, in such cases, structural test case generation cannot be used. In cases where only the web interface (executable) and some preliminary textual documents are available, none of the above techniques can be applied. For such cases, using RTG (Random Test Generation) or Large Language Model (LLM) for generating test data is an option. But the results are often incorrect and vague. Also, ensuring coverage will be a challenge. Hence, one cannot rely on only randomness or Large Language Model (LLM) to generate the test cases from minimum information.

As mentioned above, many web-testing projects lag specification documents and other related documents required for testing. Even if they are available, they are not detailed and updated. In such cases, it is very difficult to automatically generate test data.

### SUMMARY

Embodiments of the present disclosure present technological improvements as solutions to one or more of the above-mentioned technical problems recognized by the inventors in conventional systems. For example, in one embodiment, a method for large language model based automated test input generation for web applications is provided. The method includes receiving, via one or more hardware processors, a plurality of textual documents and extracting context related to each field comprised in the plurality of textual documents; rephrasing, via the one or more hardware processors, the extracted context by: (i) implementing a plurality of rules to obtain a rephrased context having a meaning identical to the extracted context; and (ii) passing each extracted context along with a first set of prompts to a Large Language Model (LLM) to obtain a set of rephrased contexts having a meaning identical to the extracted context; generating, via one or more hardware processors, a program, a validator and a first set of constraints for each extracted context, the rephrased context and the set of rephrased contexts by passing a second set of prompts to the Large Language Model (LLM); generating, via one or more hardware processors, one or more test data by running the generated program; assigning, via one or more hardware processors, ranking to the one or more test data, wherein the ranking is assigned based on a number of validators which are successfully validated and selecting the one or more test data with highest ranking; statically refining, via one or more hardware processors, the generated program using a static refinement engine by: (i) calling a mathematical library function on the highest ranked one or more test data to generate structural information pertaining to the highest ranked one or more test data for the Large Language Model (LLM); and (ii) modifying language of the second set of prompts passed to the Large Language Model (LLM) based on the structural information generated; executing, via one or more hardware processors, the highest ranked one or more test data on a web application and receiving feedback from the web application; and dynamically refining, via one or more hardware processors, each generated program using a dynamic refinement engine by: (i) passing the feedback to the Large Language Model (LLM) with a third set of prompts, wherein the Large Language Model (LLM) takes content from the feedback and provides: a) a response if there is an error message; b) a field corresponding to the error message; and c) type of a second set of constraints being violated in the error message; and (ii) refining the program for the field corresponding to the error message dynamically based on the error message received from the feedback by comparing the first set of constraints with the second set of constraints using the dynamic refinement engine.

In another aspect, there is provided a system for large language model based automated test input generation for web applications. The system comprises: a memory storing instructions; one or more communication interfaces; and one or more hardware processors coupled to the memory via the one or more communication interfaces, wherein the one or more hardware processors are configured by the instructions to: receive a plurality of textual documents and extracting context related to each field comprised in the plurality of textual documents. The system further comprises rephrasing the extracted context by: (i) implementing a plurality of rules to obtain a rephrased context having a meaning identical to the extracted context; and (ii) passing each extracted context along with a first set of prompts to a Large Language Model (LLM) to obtain a set of rephrased contexts having a meaning identical to the extracted context; generating a program, a validator and a first set of constraints for each extracted context, the rephrased context and the set of rephrased contexts by passing a second set of prompts to the Large Language Model (LLM); generating one or more test data by running the generated program; assigning ranking to the one or more test data, wherein the ranking is assigned based on a number of validators which are successfully validated and selecting the one or more test data with highest ranking; statically refining the generated program using a static refinement engine by: (i) calling a mathematical library function on the highest ranked one or more test data to generate structural information pertaining to the highest ranked one or more test data for the Large Language Model (LLM); and (ii) modifying language of the second set of prompts passed to the Large Language Model (LLM) based on the structural information generated; executing the highest ranked one or more test data on a web application and receiving feedback from the web application; and dynamically refining each generated program using a dynamic refinement engine by: (i) passing the feedback to the Large Language Model (LLM) with a third set of prompts, wherein the Large Language Model (LLM) takes content from the feedback and provides: a) a response if there is an error message; b) a field corresponding to the error message; and c) type of a second set of constraints being violated in the error message; and (ii) refining the program for the field corresponding to the error message dynamically based on the error message received from the feedback by comparing the first set of constraints with the second set of constraints using the dynamic refinement engine.

In yet another aspect, there are provided one or more non-transitory machine-readable information storage mediums comprising one or more instructions which when executed by one or more hardware processors cause receiving, via one or more hardware processors, a plurality of textual documents and extracting context related to each field comprised in the plurality of textual documents, rephrasing the extracted context by: (i) implementing a plurality of rules to obtain a rephrased context having a meaning identical to the extracted context; and (ii) passing each extracted context along with a first set of prompts to a Large Language Model (LLM) to obtain a set of rephrased contexts having a meaning identical to the extracted context; generating a program, a validator and a first set of constraints for each extracted context, the rephrased context and the set of rephrased by passing a second set of prompts to the Large Language Model (LLM); generating one or more test data by running the generated program; assigning ranking to the one or more test data, wherein the ranking is assigned based on a number of validators which are successfully validated and selecting the one or more test data with highest ranking; statically refining the generated program using a static refinement engine by: (i) calling a mathematical library function on the highest ranked one or more test data to generate structural information pertaining to the highest ranked one or more test data for the Large Language Model (LLM); and (ii) modifying language of the second set of prompts passed to the Large Language Model (LLM) based on the structural information generated; executing the highest ranked one or more test data on a web application and receiving feedback from the web application; and dynamically refining each generated program using a dynamic refinement engine by: (i) passing the feedback to the Large Language Model (LLM) with a third set of prompts, wherein the Large Language Model (LLM) takes content from the feedback and provides: a) a response if there is an error message; b) a field corresponding to the error message; and c) type of a second set of constraints being violated in the error message; and (ii) refining the program for the field corresponding to the error message dynamically based on the error message received from the feedback by comparing the first set of constraints with the second set of constraints using the dynamic refinement engine.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary title system for large language model based automated test input generation for web applications, according to some embodiments of the present disclosure.
FIG. 2 is a functional block diagram of the system for large language model based automated test input generation for web applications, according to some embodiments of the present disclosure.
FIGS. 3A and 3B are flow diagrams illustrating the steps involved in the method for large language model based automated test input generation for web applications, according to some embodiments of the present disclosure.
FIGS. 4A and 4B are block diagrams illustrating the method for large language model based automated test input generation for web applications, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present disclosure provides a system and method for large language model based automated test input generation for web applications. The present disclosure enables Large Language Model (LLM) based automated generation of strings for testing web applications from natural language documents. System and method of the present disclosure generate a program, a validator and a first set of constraints using the Large Language Model (LLM). One or more test data are generated by running the generated program and the validator validates the generated one or more test data. Further, the result of the validation by an ensemble of validators is used to rank the generated one or more test data and the highest ranked one or more test data is selected as the valid test data. The present disclosure performs static refinement to generate structural properties of the highest ranked one or more test data by calling a mathematical library function and modifying the language of the prompts passed to the Large Language Model (LLM) based on the structural information generated. Further, the present disclosure performs dynamic refinement on the generated program by passing feedback generated by executing the highest ranked one or more test data on a web application and refining the response obtained using a dynamic refinement engine.

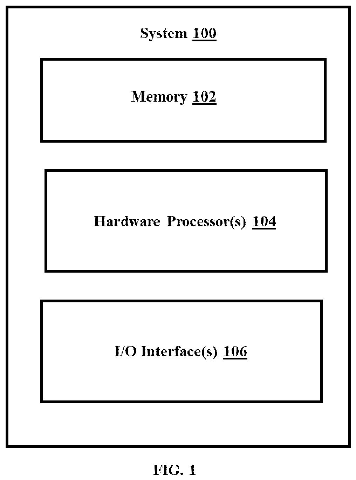

Referring now to the drawings, and more particularly to FIG. 1 through FIG.4B, where similar reference characters denote corresponding features consistently throughout the figures, there are shown preferred embodiments and these embodiments are described in the context of the following exemplary system and/or method.

FIG. 1 illustrates an exemplary system 100 for large language model based automated test input generation for web applications, according to some embodiments of the present disclosure. In an embodiment, the system 100 includes one or more processors 104, communication interface device(s) or input/output (I/O) interface(s) 106, one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic random access memory (DRAM), and/or non-volatile memory, such as read only memory (ROM), erasable programmable ROM, flash memories, hard disks, optical disks, and magnetic tapes. In an embodiment, one or more modules (not shown) of the system 100 can be stored in the memory 102.

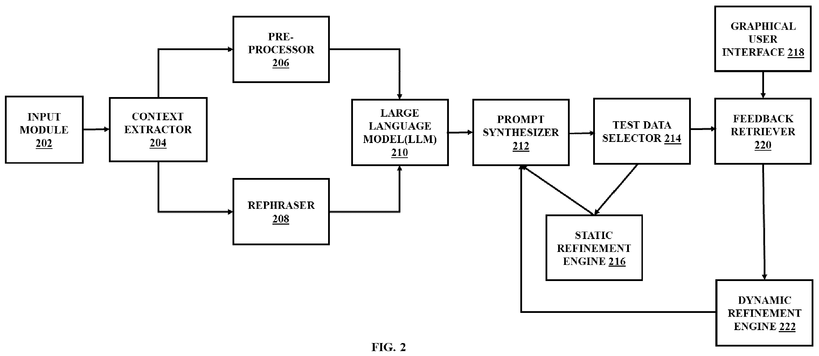

FIG. 2, with reference to FIG. 1, illustrates a functional block diagram of the system for large language model based automated test input generation for web applications, according to some embodiments of the present disclosure. In an embodiment, the system 200 includes an input module 202, a context extractor 204, a pre-processor 206, a rephraser 208, a Large Language Model (LLM) 210, a prompt synthesizer 212, a test data selector 214, a static refinement engine 216, a graphical user interface 218, a feedback retriever 220 and a dynamic refinement engine 222.

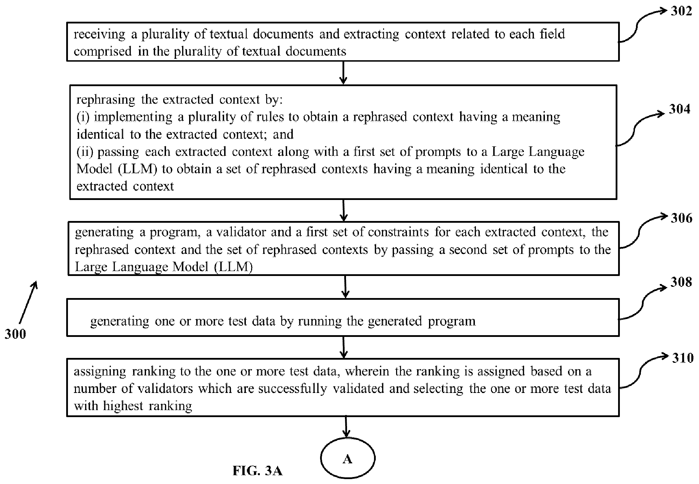

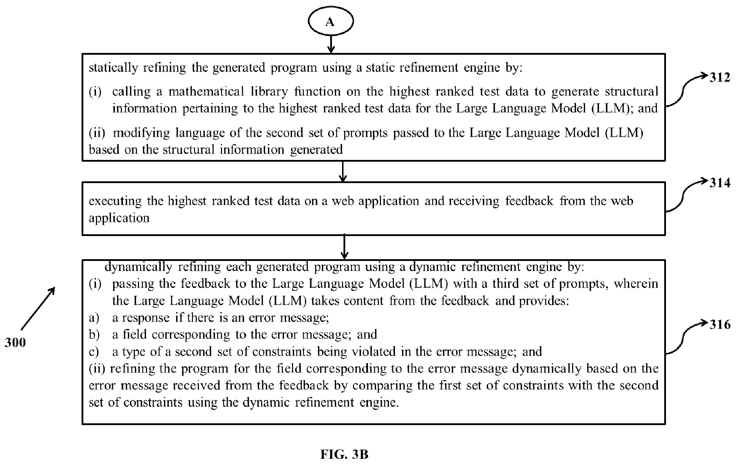

FIGS. 3A and 3B are flow diagrams illustrating a processor implemented method for large language model based automated test input generation for web applications using the system of FIG. 1, according to some embodiments of the present disclosure. Steps of the method of FIG. 3 shall be described in conjunction with the components of FIG. 2. At step 302 of the method 300, the one or more hardware processors 104 receives a plurality of textual documents and extract context related to each field comprised in the plurality of textual documents. The plurality of textual documents can be any natural language documents including user manuals, frequently asked questions (FAQ) documents, user stories, user requirement documents and the like, which is represented by the input module 202. A context is a block of text relevant to web form elements for which data needs to be generated. The context extractor 204 takes the plurality of textual documents as input and extracts the text related to each field. Further, the extraction of the context can be done manually or through string pattern matching. A Large Language Model (LLM) connector establishes the connection with given Large Language Model (LLM) 210 based on the given parameters (such as degree of randomness, model, version). Once the connection is established, the Large Language Model (LLM) connector fires the prompt and stores the response received for further processing. The Large Language Model (LLM) connector is internally used by multiple components or modules to fire prompts and get updated prompts i.e., updated response.

At step 304 of the method 300, the one or more hardware processors 104 rephrase the extracted context by:
(i) implementing a plurality of rules to obtain a rephrased context having a meaning identical to the extracted context; and
(ii) passing each extracted context along with a first set of prompts to a Large Language Model (LLM) to obtain a set of rephrased contexts having a meaning identical to the extracted context.

The pre-processor 206 implements a plurality of rules to rephrase the context having the meaning identical to the extracted context. The purpose of obtaining the rephrased context is to generate multiple programs and validators to be used for refinement. The repharser 208 passes each extracted context along with a first set of prompts to the Large Language Model (LLM) 210 to obtain a set of rephrased contexts having a meaning identical to the extracted context. The difference between the pre-processor 206 and the repharser 208 is that the repharser 208 uses the Large Language Model (LLM) 210 to rephrase the extracted context whereas the pre-processor 206 uses rules to rephrase the extracted context.

### Use case for the rephraser 208:

Original context C1: Password should be alphanumeric. Minimum length of 8 characters and maximum of 20 characters. The password should contain at least one special character and at least one alphabet in capital.

Rephrased context C2 by method 1 (implementing a plurality of rules to obtain a rephrased context having a meaning identical to the extracted context): The password must be a combination of letters and numbers, with a minimum length of 8 characters and a maximum length of 20 characters. The password must include at least one special character and at least one uppercase letter.

Rephrased contexts by method 2 (passing each extracted context along with a first set of prompts to the Large Language Model (LLM) 210 to obtain a set of rephrased contexts having a meaning identical to the extracted context):
C3: The password must be a combination of letters and numbers, with a minimum length of 8 characters and a maximum length of 20 characters. The password should include at least one special character and one uppercase letter.
C4: The password must be a combination of letters and numbers, with a minimum length of 8 characters and a maximum length of 20 characters. The password should also include at least one special character and at least one uppercase letter.

At step 306 of the method 300, the one or more hardware processors 104 generate a program, a validator and a first set of constraints for each extracted context, the rephrased context and the set of rephrased contexts by passing a second set of prompts to the Large Language Model (LLM) 210. The validator is a function generated from each context, wherein the validator implements a plurality of constraints comprised in it. If any constraint comprised in the validator fails, the validator should return false. The prompt synthesizer 212 is responsible for creating prompts to be fired. In first iteration of loop, the second set of prompts are based on the contexts and wherein the second set of prompts generate constraints, programs, and validators from the Large Language Model (LLM) 210. In a subsequent loop iteration, the prompt synthesizer 212 interacts with the static refinement engine 216 or the dynamic refinement engine 222 and receives structural information that can be used to repair an incorrect input leading to repair the generated program. Based on the received structural information about the one or more test data, the prompt synthesizer 212 creates prompts to get information from the Large Language Model (LLM) 210 regarding a possible cause for any error which might occur in the generated program and to fix the generated program.

### Use case for generating constraints, programs, validators, and test data for each context C 1 to C4):

Table 1 depicts the constraints generated for each context (C1 to C4).

**Table 1**

| C1 | C2 | C3 | C4 |
|---|---|---|---|
| 1. Minimum length of 8 characters | 1. Combination of letters and numbers | 1. Combination of letters and numbers | 1. Combination of letters and numbers |
| 2. Maximum length of 20 characters | 2. Minimum length of 8 characters | 2. Minimum length of 8 characters | 2. Minimum length of 8 characters |
| 3. Should bealphanumeric | 3. Maximum length of 20 characters | 3. Maximum length of 20 characters | 3. Maximum length of 20 characters |
| 4. Should containatleast one special character | 4. At least one special character | 4. At least one special character | 4. At least one special character |
| 5. Should contain atleast one alphabet in capital | 5. At least one uppercase letter | 5. At least one uppercase letter | 5. At least one uppercase letter |

Table 2 to Table 5 depicts the programs generated for each context (C1 to C4).

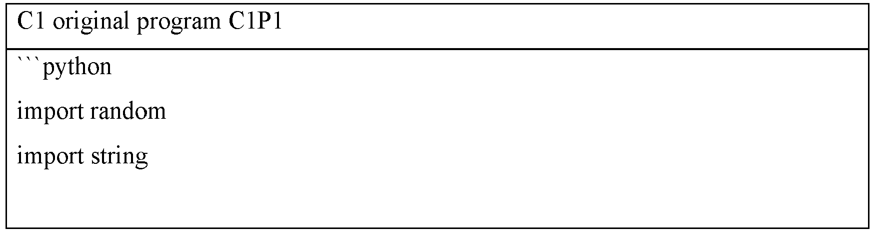

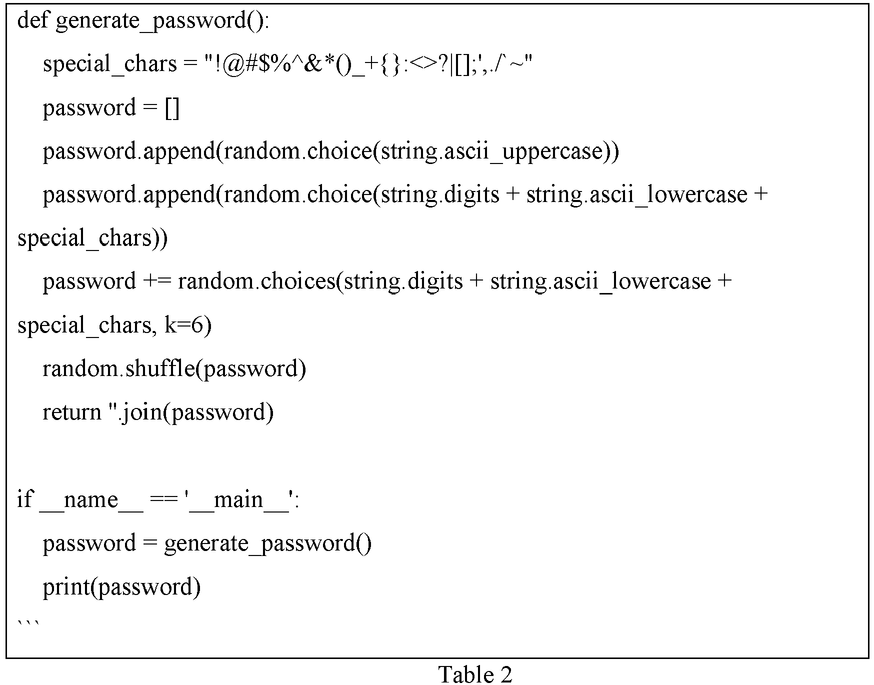

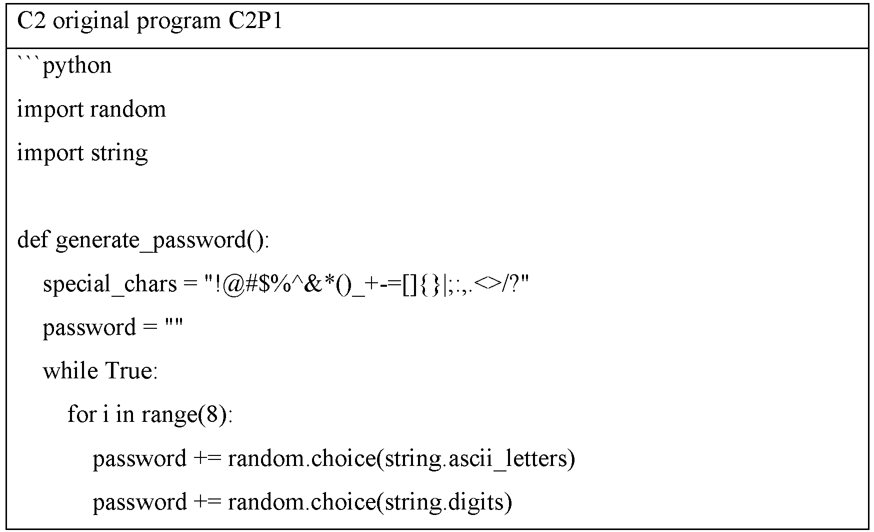

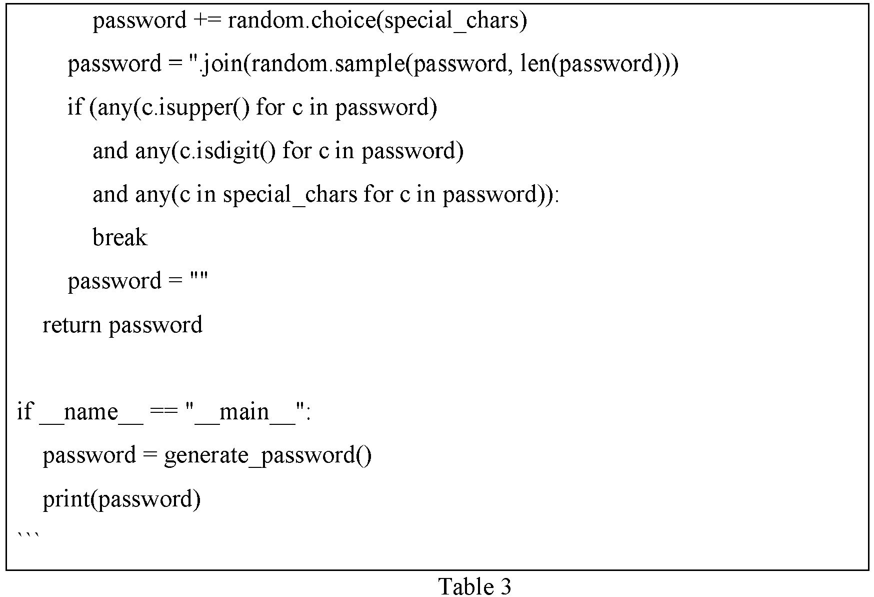

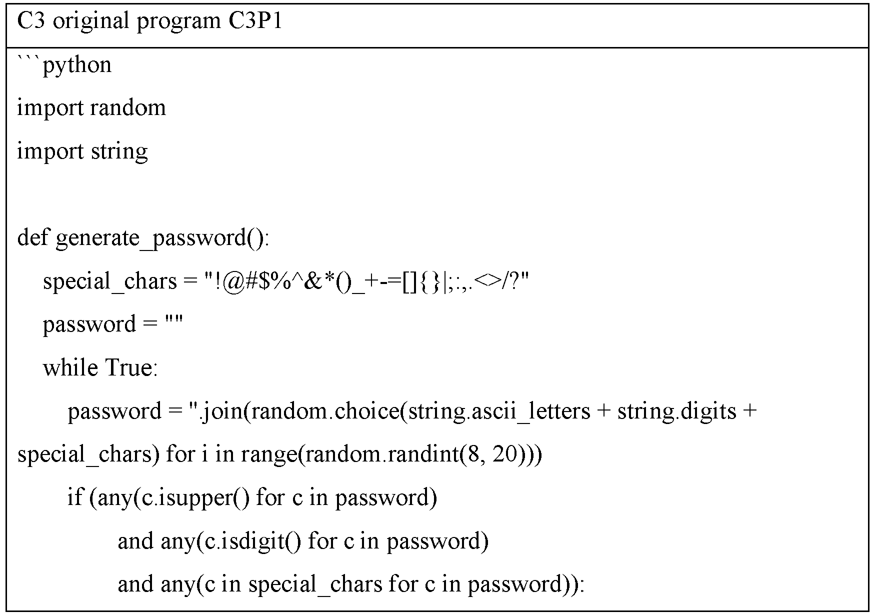

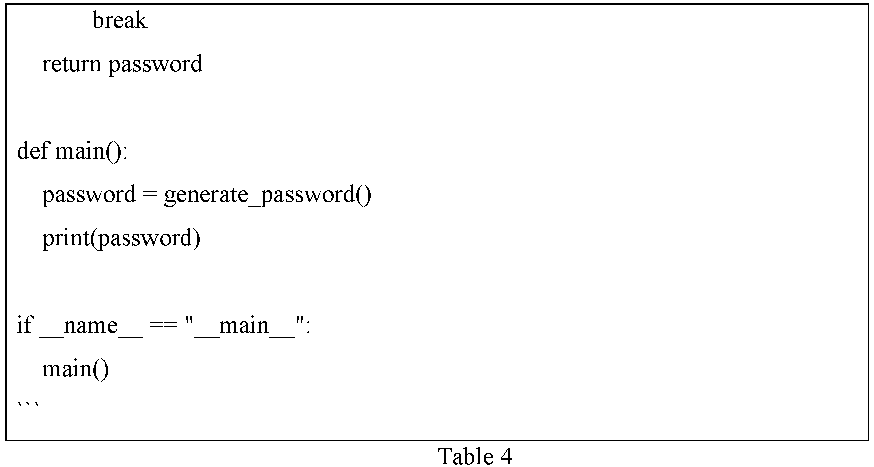

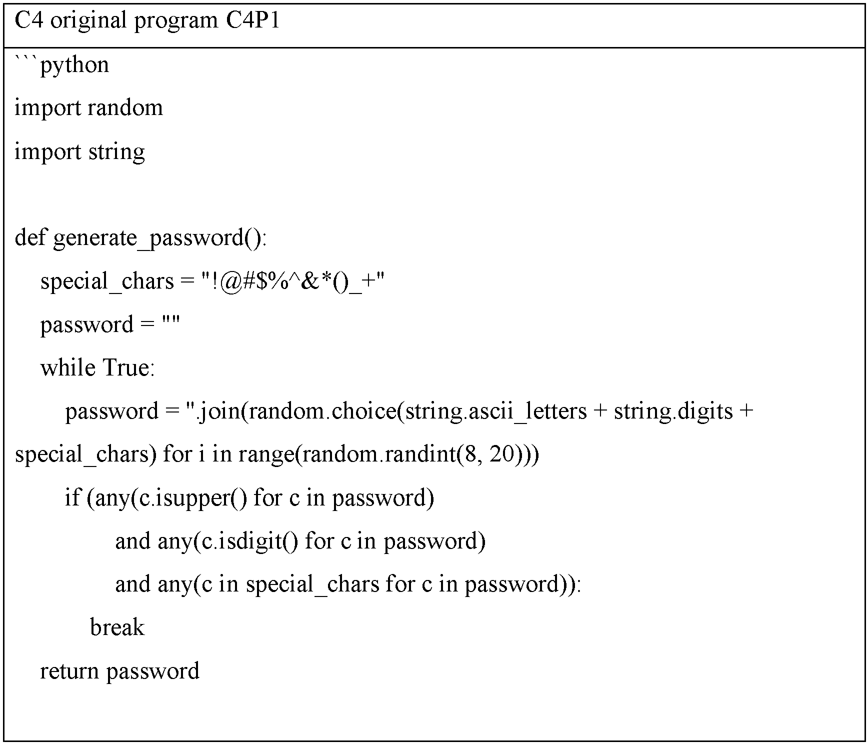

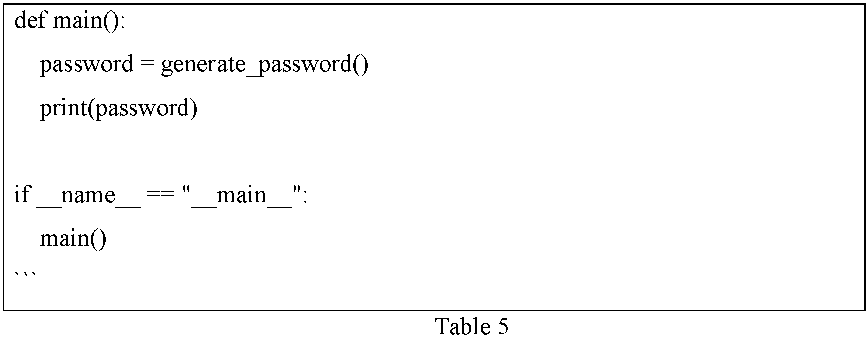

Table 6 to Table 9 depicts the validators generated for each context (C1 to C4).

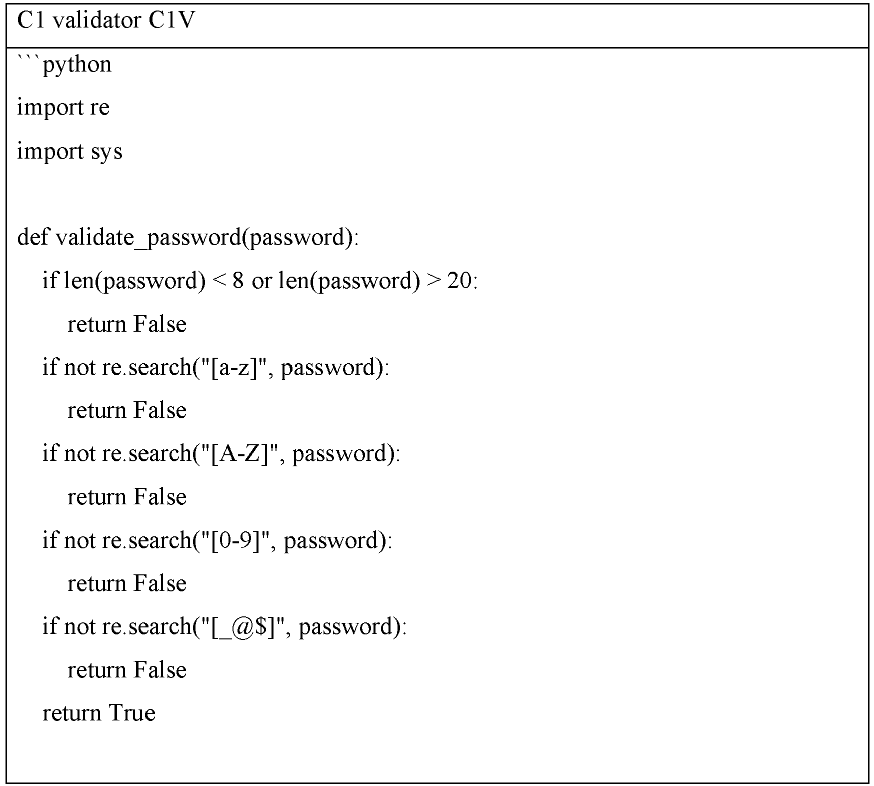

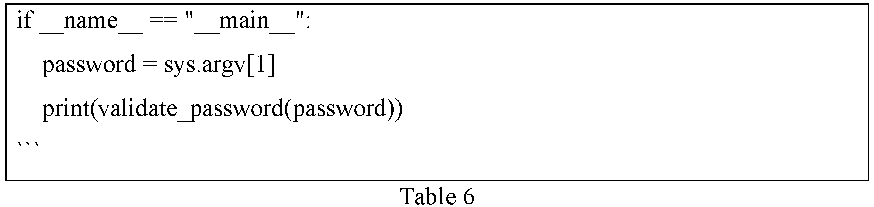

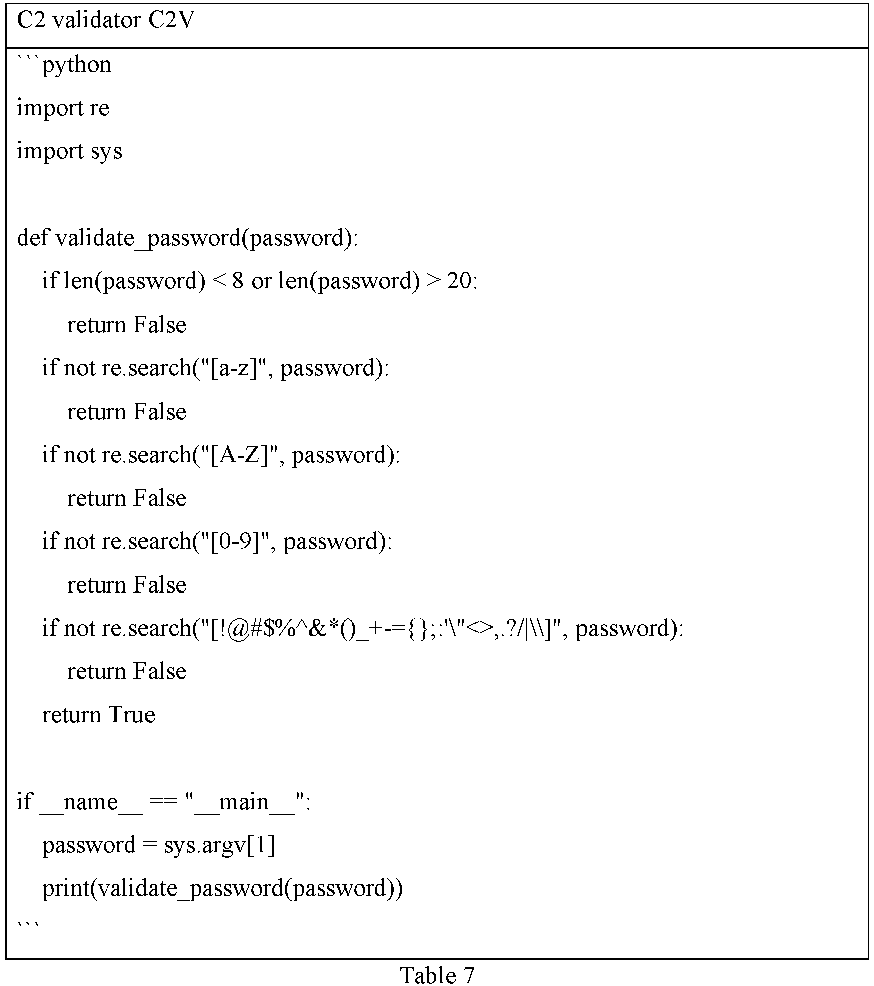

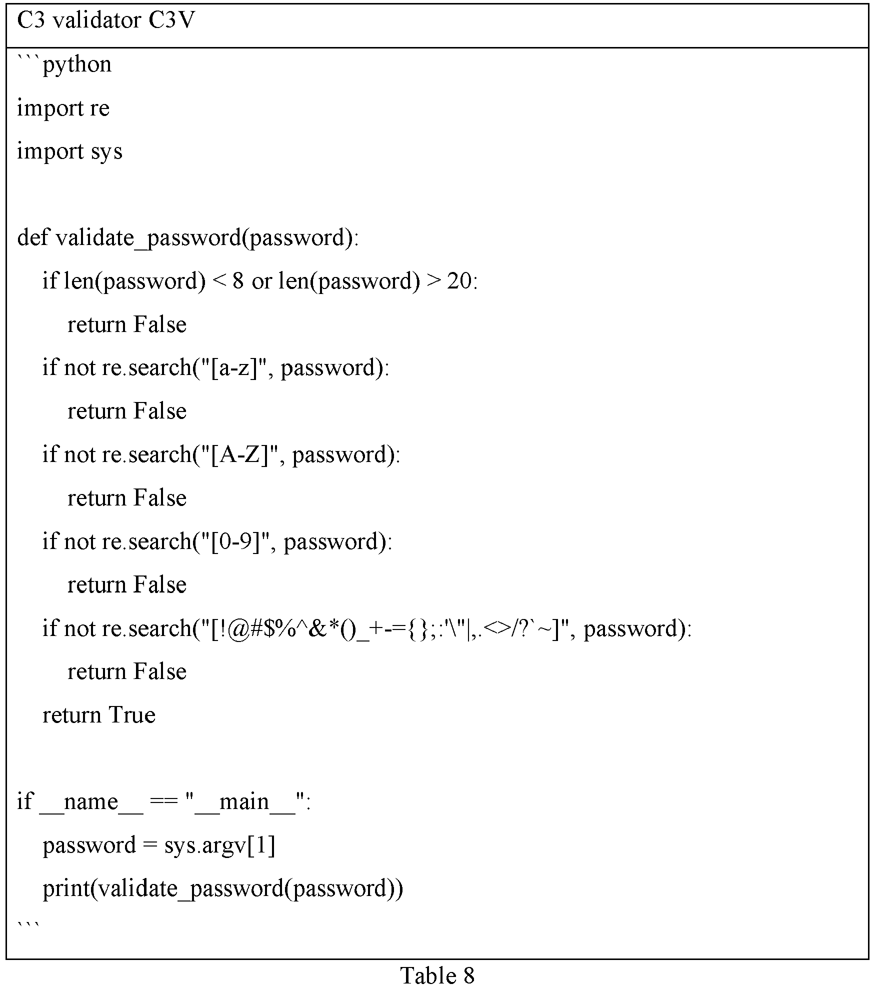

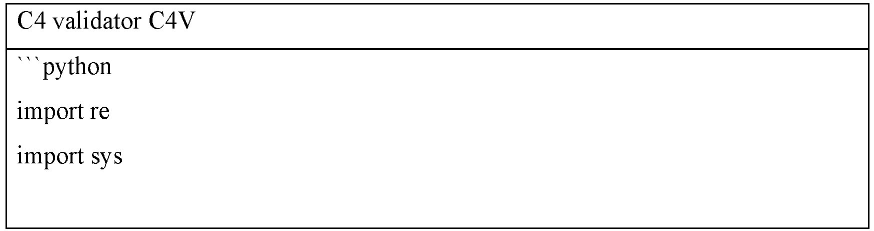

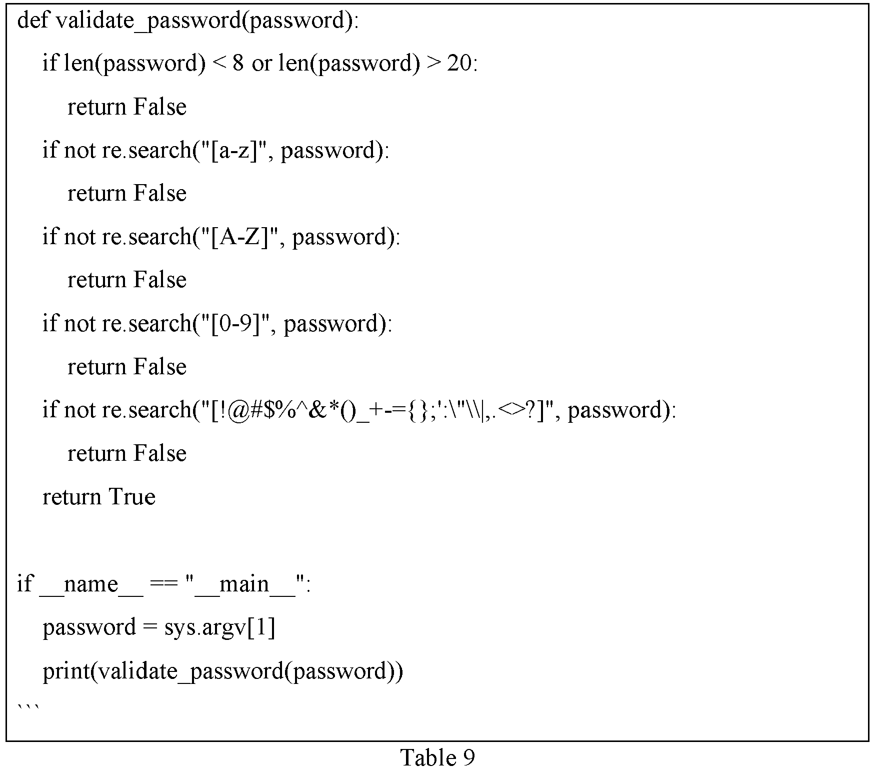

At step 308 of the method 300, the one or more hardware processors 104 generate one or more test data by running the generated program. In an embodiment, "test data" may be referred as "string" and can be used interchangeably in the present disclosure Table 10 depicts one or more test data generated by running the generated program.

**Table 10**

| Contex t | C1 | C2 | C3 | C4 |
|---|---|---|---|---|
| Text data | >Q.wo{f t | /y0)Z]a46O-0!48)W -Jc36R | @EGKxurf5>E3Vl J | 9z!D5Z6Lmmy0 V |

At step 310 of the method 300, the one or more hardware processors 104 assigns ranking to the one or more test data, wherein the ranking is assigned based on a number of validators which are successfully validated. The one or more test data with highest ranking are selected. The test data selector 214 takes the first set of constraints, program, validator, and the one or more test data as input for each extracted and rephrased context, wherein the one or more test data is generated by running the generated program and not the Large Language Model (LLM) 210. Further, the test data selector 214 tries to provide ranking to the one or more test data and select the one or more test data with highest ranking. The ranking for the one or more test data is assigned based on the result of execution of the one or more test data of each generated program on a plurality of validators having the context set. The test data selector 214 assigns a corresponding ranking to the one or more test data depending on whether the validator returns, true or false. Further the test data selector 214 assigns a different ranking in case the validator does not return an output or gives an error. The highest ranking is assigned to the one or more test data if highest number of validators are successfully validated for the corresponding one or more test data. Based on this, the one or more test data is ranked, and the best one or more test data with highest ranking is selected for each context and executed on available web application.

Table 11 depicts assigning of ranks to the one or more test data based on the number of validators which are successfully validated.

**Table 11**

| Contex t | C1 | C2 | C3 | C4 |
|---|---|---|---|---|
| Text data | >Q.wo{f t | /y0)Z]a46O_0!48)W -Jc36R | @EGKxurf5>E3Vl J | 9z!D5Z6Lmmy0 V |
| Weight | 1 | 0 | 2 | 2 |

At step 312 of the method 300, the one or more hardware processors 104 statically refine the generated program using a static refinement engine by:
(i) calling a mathematical library function on the highest ranked one or more test data to generate structural information pertaining to the highest ranked one or more test data for the Large Language Model (LLM); and
(ii) modifying language of the second set of prompts passed to the Large Language Model (LLM) based on the structural information generated.

In an embodiment of the present disclosure, the inputs to the static refinement engine 216 are the first set of constraints, the program, the validator, and the one or more test data with the corresponding ranking. Herein, the refinement is called static, because it does not use any feedback from the web application and uses the structural data already available and creates prompts along with the prompt synthesizer 212 to refine the programs. The static refinement engine 216 initially tries to understand the structural information of the one or more test data through a plurality precise prompts. The static refinement engine 216 comprises two types of prompts: precise and generic. The plurality of precise prompts is fired using library functions that gives precise answers about the structural information of the one or more test data. A plurality of library functions can be used to obtain structural information of the one or more test data. For e.g., "what is the length of string?" or "does it contain special characters?". Based on this structural information of the one or more test data, the static refinement engine 216 creates a plurality of generic prompts. For e.g., if the one or more test data contains special characters, the static refinement engine 216 creates the generic prompt "Is it allowed in given context?". However, response to this generic prompt to the Large Language Model (LLM) 210 may give vague answers, wherein combination of the plurality of generic prompts and the precise prompts makes the understanding of the structural information of the one or more test data better.

### Use case for static refinement based on precise mathematical function and approximate queries.

Extracting precise information about the one or more test data using library functions which includes a plurality of mathematical functions:
For example, C2 test data has length = 24, it has special characters, it has upper case letters and lower-case letters.

Now, using the above information, a sample updated prompt for the one or more test data is "The total length of Password as per one of the outputs of the above python program is 24. Is this length as per the allowed range or value according to the above constraints of Password? If so, answer with string "YES" only, and do not give any other explanation. Otherwise, please provide complete python program with the corrected length."

Further, using a plurality of updated prompts, a first set of refined programs and test data are generated after the static refinement which are depicted as follows:

Table 12 to Table 15 depicts the first set of refined programs and test data generated after static refinement.

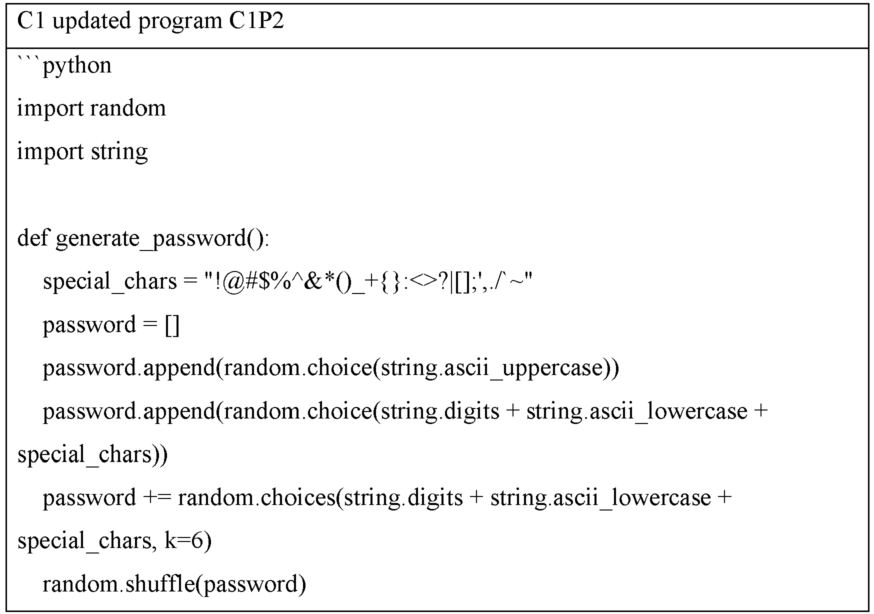

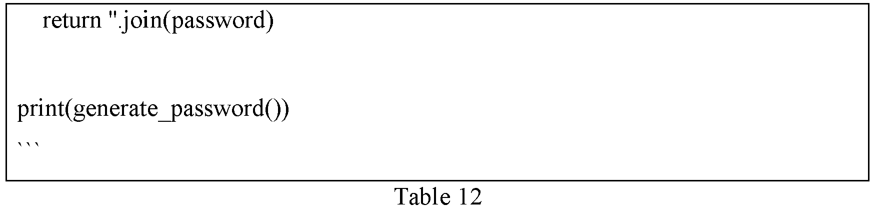

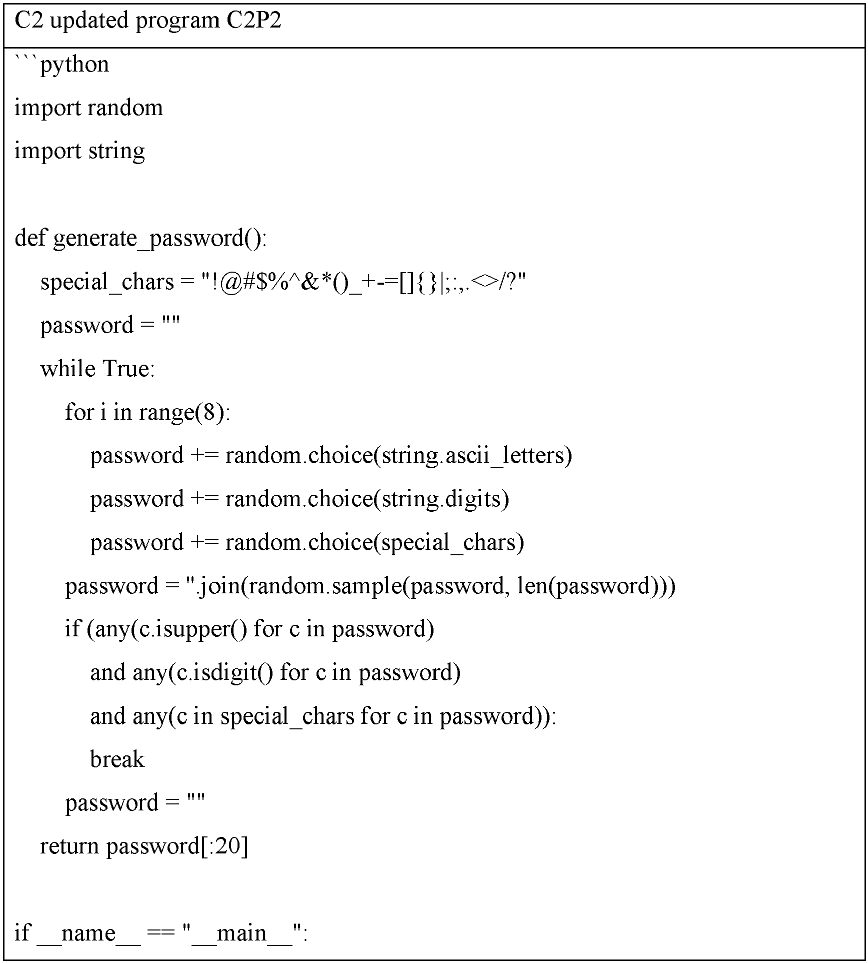

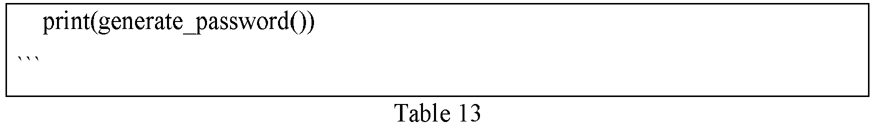

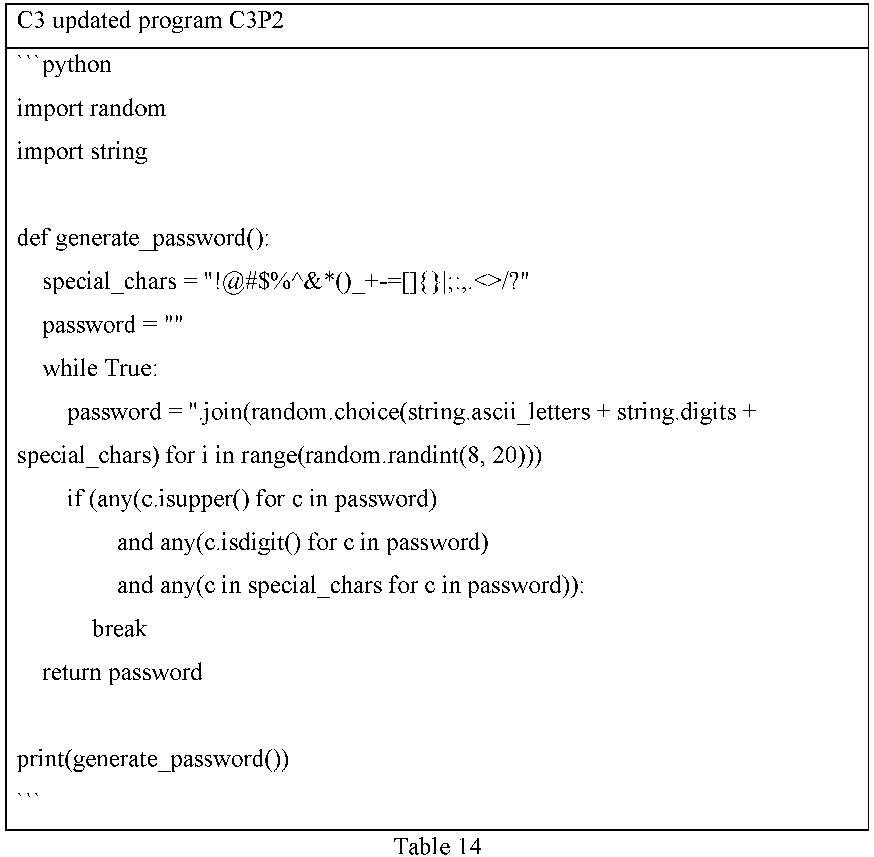

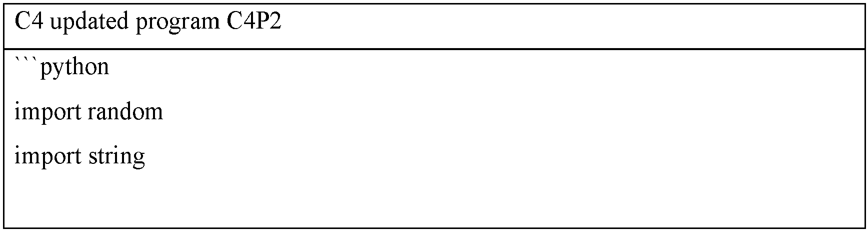

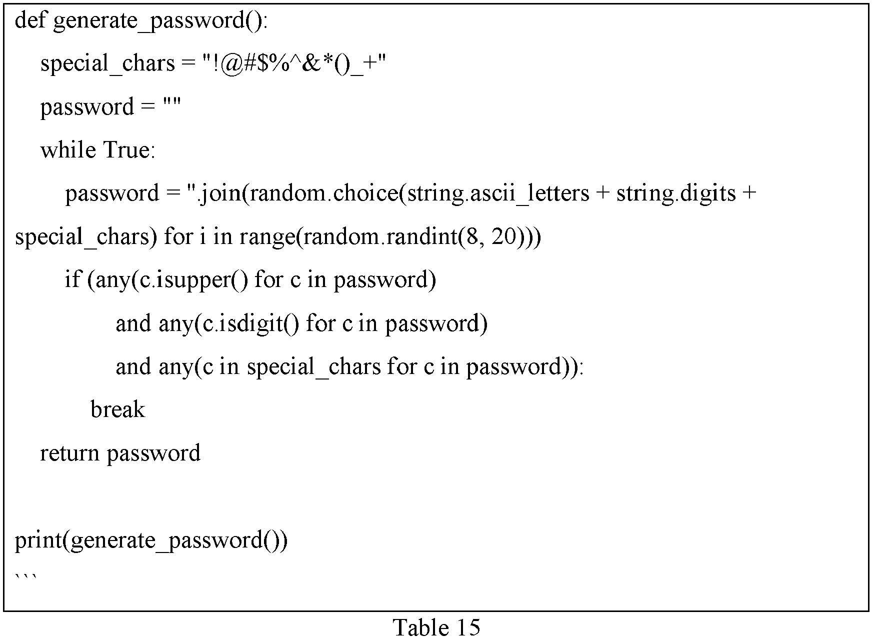

Table 16 depicts assigning corresponding ranks to the one or more test data generated through the first set of refined programs.

**Table 16**

| Contex t | C1 | C2 | C3 | C4 |
|---|---|---|---|---|
| Text data | ](eg.'I u | [1<1,XNMHrM*1v(=34 [3 | jera_+FQKw/q 1 | LxbgkNMOoH^wx 4 |
| Ranks | 0 | 2 | 3 | 2 |

At step 314 of the method 300, the one or more hardware processors 104 executes the highest ranked one or more test data on a web application and receives feedback from the web application. The feedback retriever 220 takes the final test data i.e., the highest ranked one or more test data. For e.g., username = X, password = Y is test data or collection of two highest ranked test data generated by the test data selector 214 and executed on the web application. The feedback retriever 220 stores the feedback in the form of HyperText Markup Language (HTML), JavaScript, typescript, images, screenshots or combinations thereof. Further, the stored feedback is passed to the dynamic refinement engine 222.

### Use case for executing the one or more test data and executing on the web application:

Referring to the table 16, it is observed that the test data for refined C3 program has highest ranking. Hence *jera_*+*FQKw*/*q1* is selected and executed on the web application. After executing, the feedback which may or may not have error is obtained, wherein this feedback is passed to the dynamic refinement engine 222 for the dynamic refinement.

At step 316 of the method 300, the one or more hardware processors 104 dynamically refine each generated program using a dynamic refinement engine by:
(i) passing the feedback to the Large Language Model (LLM) with a third set of prompts, wherein the Large Language Model (LLM) takes content from the feedback and provides:
   a) a response if there is an error message;
   b) a field corresponding to the error message; and
   c) type of a second set of constraints being violated in the error message; and
(ii) refining the program for the field corresponding to the error message dynamically based on the error message received from the feedback by comparing the first set of constraints with the second set of constraints using the dynamic refinement engine.

In an embodiment of the present disclosure, the inputs to the dynamic refinement engine 222 are the first set of constraints, the program, the validator, the one or more test data with the corresponding ranking and feedback received from the web application after executing the highest ranked one or more test data. The feedback can be any form including HTML, JavaScript and the like. Further, the feedback is processed and passed to the Large Language Model (LLM) 210 with the third set of prompts. The Large Language Model (LLM) 210 takes the content from the feedback and provides a response, wherein the response contains information whether there is any error message or not. Based on the information about the error message, the dynamic refinement engine 222 again interacts with the Large Language Model (LLM) 210 to refine the generated program based on the relevant error message.

### Use case for Dynamic refinement:

Consider "ABCD1234E" is executed for PAN number

Following is a sample segment of feedback received:

| |
|---|
| ```
 <div class="input-container">
   <label for="pan_no">PAN no *:</label>
   <input type="text" id="pan_no" name="pan_no" required="" class="invalid">
 </div>
 <span class="tooltip" onclick="toggleTooltipVisibility(event)">?
   <span class="tooltiptext">PAN number is a ten-digit unique alphanumeric
 number. The first five characters are letters (in uppercase by default), followed by
 four numerals, and the last (tenth) character is a letter.</span>
 </span>
 <span id="panError" style="color:red">Invalid PAN Number. Length is
 less</span>
   <div class="input-container">
     <label for="nationality">Nationality *:</label>
     <input type="text" name="nationality" id="nationality" required="">
   </div>
 </div>
``` |

The feedback is then processed and given to the Large Language Model (LLM) 210 using third set of prompts to generate following information:
Error message presence: YES
Field of error message: PAN number
Violated constraint type: Length
Violated Constraint: Length is less than expected

Now, the above-mentioned violated constraint (the second set of constraints) is compared with the first set of constraints generated using the second set of prompts. One of the ways of comparing the violated constraint with the first set of constraints is by converting both to satisfiability formulas and check for their satisfiability.

Based on result of this comparison, the third set of prompts are provided to the Large Language Model (LLM) 210 to generate a second set of refined programs (the second set of refined programs are nothing but further refined version of the first set of refined programs) and the test data after dynamic refinement.

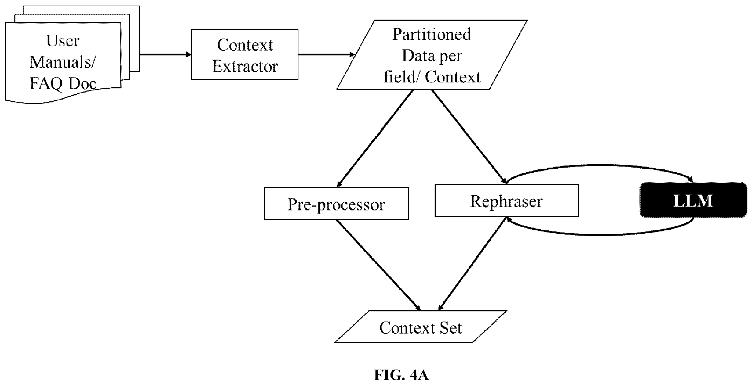

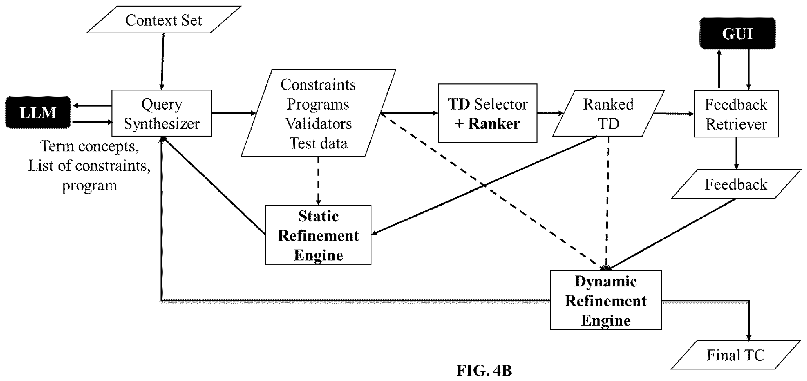

FIGS. 4A and 4B are block diagrams illustrating the method for large language model based automated test input generation for web applications, according to some embodiments of the present disclosure. FIG.4A deals with creating a set of context sets for each context provided in the plurality of textual documents, wherein these contexts are mapped to various fields in the web application. As mentioned above in the earlier sections, the flow chart starts with the preliminary documents from which context are extracted field wise either manually or by using simple pattern matching. For each context *Cᵢ*, two processes are executed in parallel, wherein in first process, *Cᵢ* is passed to the pre-processor 206 and the plurality of predefined rules are implemented to rephrase the context. Further, the plurality of predefined rules has derived manually from analyzing various context and their variants which have the meaning identical to the context. In second process, the Large Language Model (LLM) 210 is used to rephrase the context which have the meaning identical to the context, wherein this interaction with Large Language Model (LLM) 210 happens via the Large Language Model (LLM) Connector that fires the first set of prompts. After the first process and second process, the set of rephrased texts for each context that have same meaning as the extracted context are obtained. Further these context sets (CS) are the input for FIG. 4B.

### Pseudocode for Module 1:

Module 1 comprises of the context extractor 204 and the rephraser 208 which takes the documents as an input and rephrases the extracted context to produce the set of same meaning contexts which is depicted in FIG.4A.

### Functions:

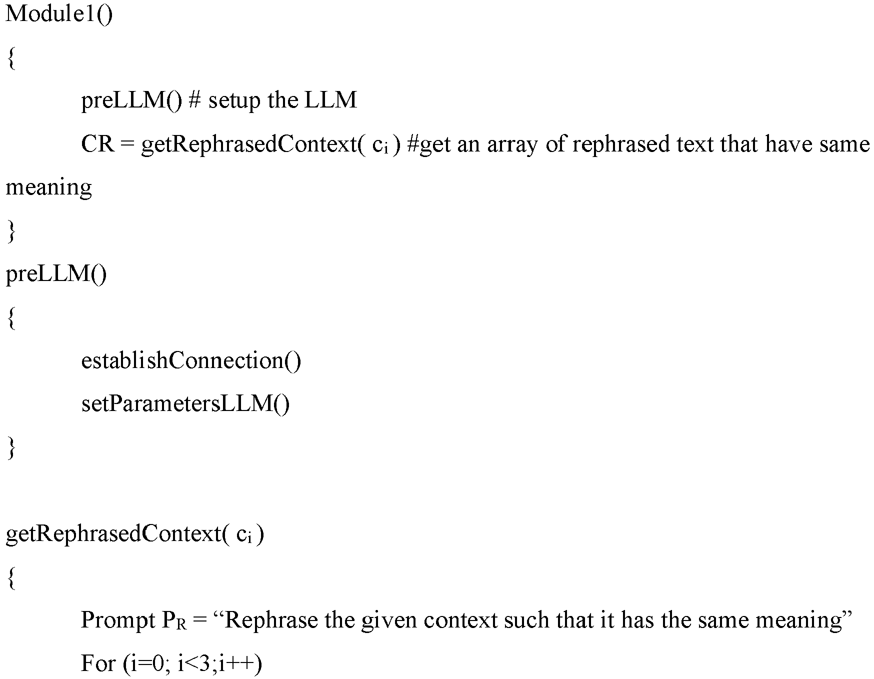

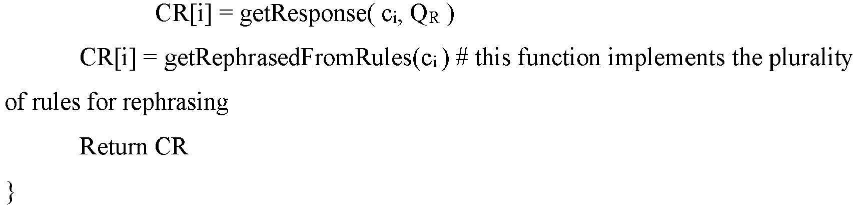

Referring to FIG.4B, the context sets (CS) are passed to the prompt synthesizer 212 which interacts with the Large Language Model (LLM) connector internally and fires the second set of prompts based on the contexts. For each rephrased context, the second set of prompts generate the first set of constraints (CN) (in natural language), generator program P (which generates the test data that follows the constraints written in the context), test data TD (generated by running the program) and the validator V (that takes a test data as input and returns true/false based on whether the test data satisfies the constraints modelled in the validator). Since the validator V is also generated through Large Language Model (LLM) 210, the validator V may give incorrect results in some cases. Hence, a tuple {CN, P, TD, V} is created for each extracted and rephrased context. The program generates partially correct test data in most of the cases, which are refined later using the static refinement and the dynamic refinement respectively. The tuples are provided as input to the three modules namely the test data selector 214, the static refinement engine 216 and the dynamic refinement engine 222. The test data selector 214 is responsible for assigning ranking to the one or more test data and select the one or more test data with highest ranking. The ranking for the one or more test data is assigned based on the result of execution of the one or more test data of each program on all the validators of same context sets (CS).

### Pseudocode for Module 2:

Module 2 comprises the test data selector 214 which interacts with the Large Language Model (LLM) 210 to generate multiple programs for all given contexts and rank them using validators. This maps to flow *'Context set* -> *Query Synthesizer* -> *TD Selector + Ranker -> Ranked TD '*

### Functions:

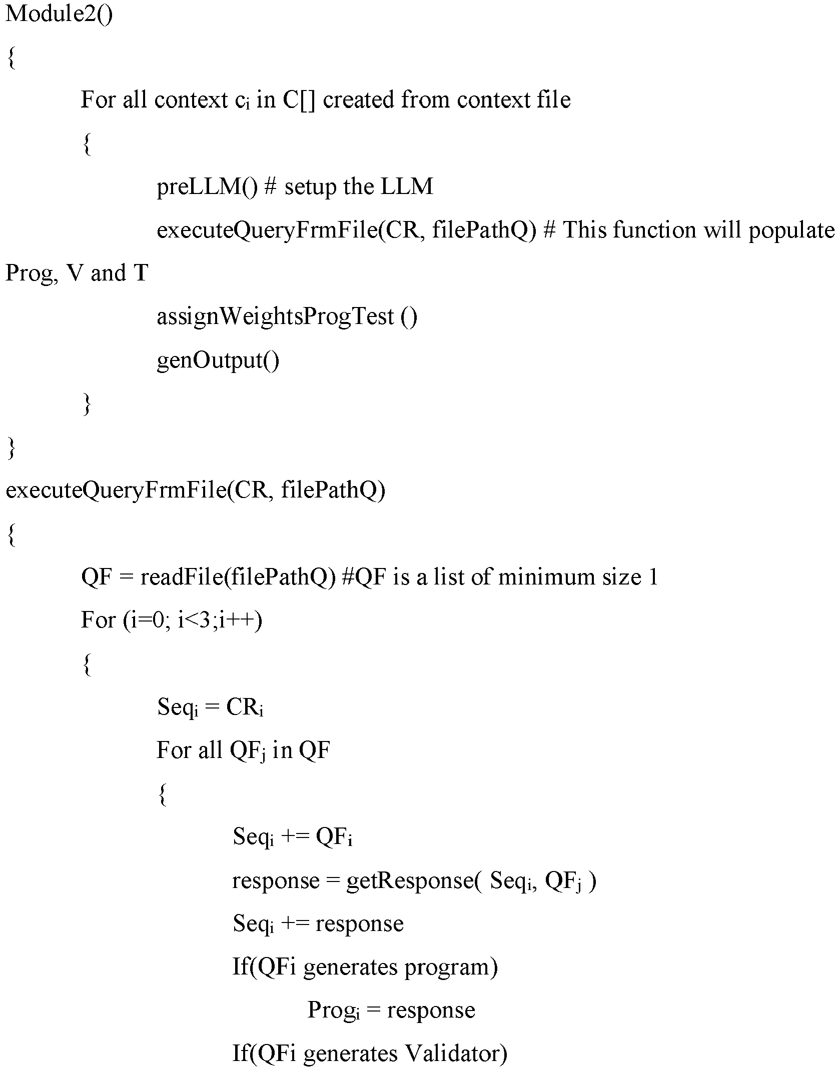

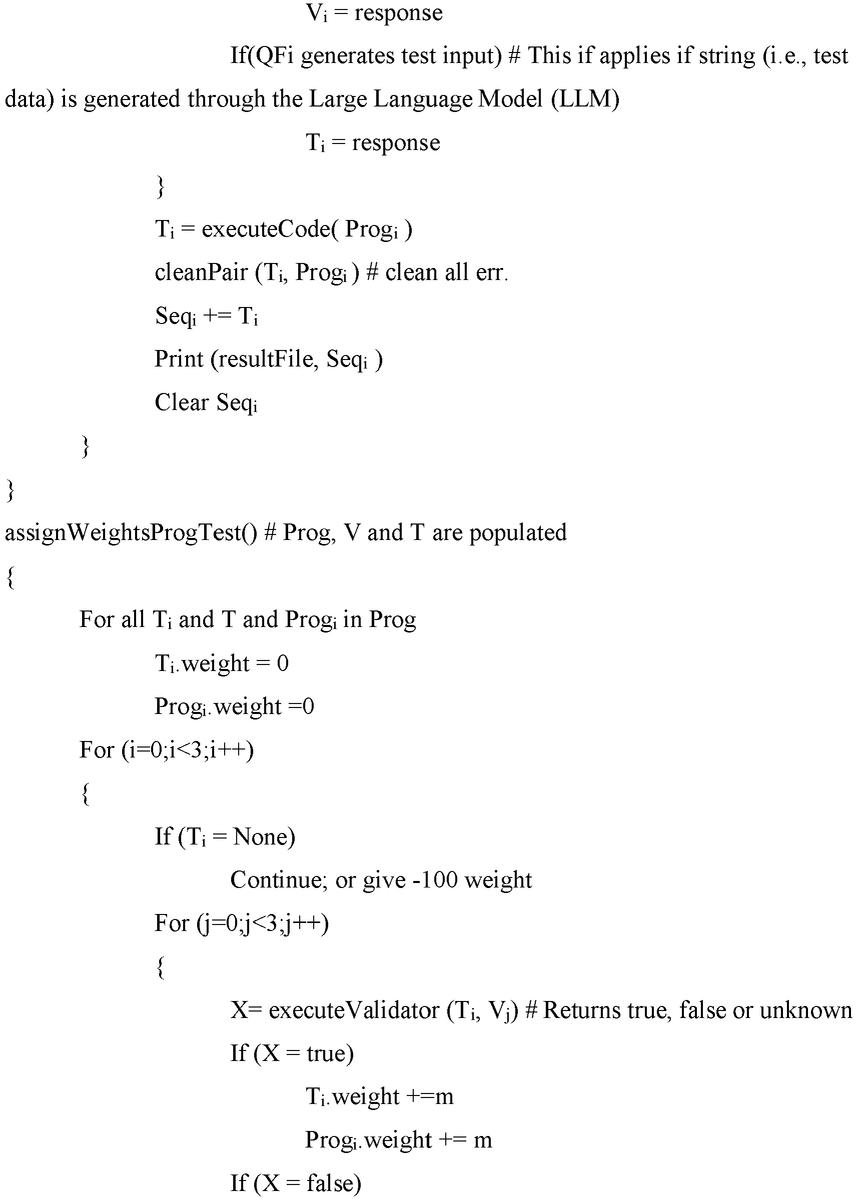

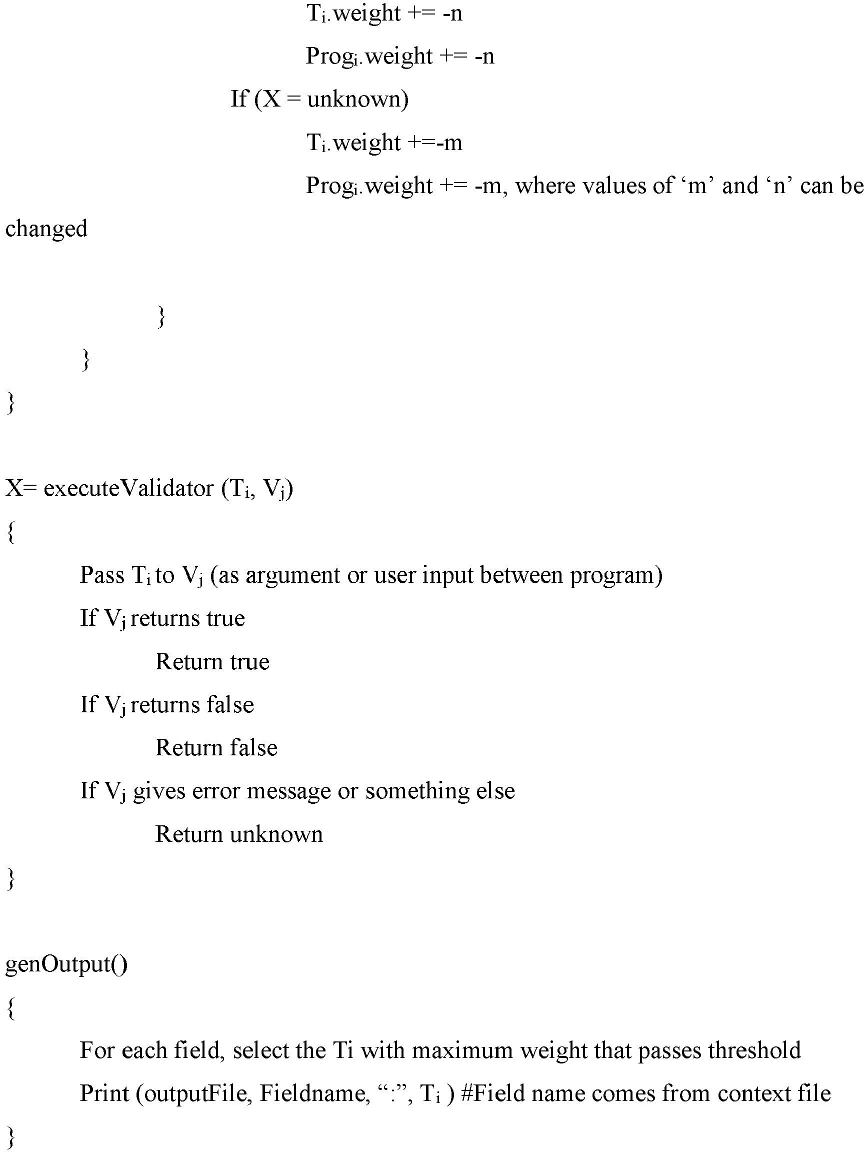

In an embodiment of the present disclosure, the output of the test data selector 214 is passed to the static refinement engine 216, the feedback retriever 220 and the dynamic refinement engine 222. The static refinement engine 216 and the dynamic refinement engine 222 work independent of each other. The static refinement engine 216 is called in a loop and in every iteration, the static refinement engine 216 understands more about the generated one or more test data and expected one or more test data. With every iteration, the static refinement engine 216 tries to obtain refined version of the program so that the input provided to the dynamic refinement engine 222 also improves. Further, only the static refinement may not be enough in certain cases to generate correct test data as the static refinement engine 216 cannot guarantee the correctness. For this reason, the present disclosure also includes the dynamic refinement engine 222 which uses the feedback received from the web application which assures of obtaining correct test data.

Pseudocode for Module 3:

### Module 3: Static Refinement Engine

Module 3 uses the data generated by module 2 and updates the second set of prompts along with prompt synthesizer 212 to get more information and refine the programs. Input files:
1. Lists/ Arrays created by module 2: Ranked Tuples of {Progi, Ti, Vi }
2. Constraints in natural language

### Functions:

```
 refineStatic()
 {
      stringInfo = fireSpecificPrompts() # String info is DS that consist of length,
      type, etc
      createGenericPrompts(stringInfo)
      addToContext(Ci, stringInfo)
      GoTo Module2
 }
```

In an embodiment of the present disclosure, the highest ranked one or more test data is passed to the feedback retriever 220, after having a few iterations with the static refinement. The feedback retriever 220 executes the highest ranked one or more test data on the web application. The present disclosure may use any automation scripts like selenium scripts for execution and stores the feedback in form of HTML, JavaScript, typescript, images, or screenshots, based on the type of the web application under test. The feedback is then passed to the dynamic Refinement engine 222. The dynamic refinement engine 222 comprises information about the first set of constraints, the programs, the validators, ranked one or more test data and the feedback. The feedback can be any form like HTML, javascript and the like, and the feedback is generally not in a format that can be readily used for refinement. Hence, the feedback is processed through few simple scripts which extracts important text from entire feedback page. Resulting text is then passed to the Large Language Model (LLM) 210 with the third set of prompts through the prompt synthesizer 212. The Large Language Model (LLM) 210 returns the information related to the error messages and successful execution, which comprises whether there is any error message, what is that error message and what constraint is violated. Based on the information about the error message or successful execution, the dynamic refinement engine 222 again interacts with the Large Language Model (LLM) 210 to refine the program. For example, if the error message mentions that password should contain special characters, the dynamic refinement engine 222 investigates the programs and the one or more test data to fix them or interact with the Large Language Model (LLM) 210 to fix them. The dynamic refinement engine 222 also uses the information about the constraint which is violated and compares the violated constraint (the second set of constraints) with the first set of constraints to refine the program. After every iteration of the dynamic refinement, refined version of programs is obtained, and the one or more test data are passed to the feedback retriever 220 for executing. Further, inside every iteration of the dynamic refinement, loop of the static refinement can also be executed as a nested loop. Together, the static refinement engine 216 and the dynamic refinement engine 222 produces the final test inputs or test data for all given context with maximum confidence of having the correct test data. Confidence of having the correct test data is determined by a combination of ranking process (ranking process used by the test data selector 214) and successful feedback from the web application. The dynamic refinement terminates when either all runs on the graphical user interface (GUI) 218 returns successful execution, or some fixed numbers of iterations have exhausted.

### Pseudocode for Module 4:

The feedback retriever 220 interacts with given web application and run the test data on the web application. The feedback retriever 220 receives the output from the web application and provides the feedback on generated test data, which is passed to the dynamic refinement engine 222. Module 4 maps to flow 'Ranked TD -> Feedback Retriever -> Feedback'

### Input files:

1. File generated by module2 containing field name and test input
2. File containing information about website like what is xpath, unique name of each button, text field

### Functions:

```
 Running the test data on the web application
 feedbackRetriever()
 {
      DataStructure X = Parse(File1, File2)
      establishConnectionSel(weblink)
      response = executeWebTestCase(X) # This response is a string (test data) that
 contains the text returned by the web application. The text can be in form of HTML,
 XML, etc. The response consists of error message (if any) embedded in text.
 }
```

### Pseudocode for Module 5: Dynamic Refinement Engine

Module 5 uses the data generated by module 2 and the feedback retriever 220 and creates prompts along with prompt synthesizer 212 to get more information and refine the programs.

### Input files:

Lists/ Arrays created by module 2: Ranked Tuples of {Progi, Ti, Vi }
Constraints in natural language
Feedback for application

### Functions:

```
 refineDynamic()
 {
      FP=processFeedbackReceived()
      E= ExtractErrorMsg(FP, LLM)
      Diff = compare(violatedConstraint, constraintSet)
      updateInfo (stringInfo, E, Diff)
      addToContext(Ci, stringInfo)
      GoTo Module2
 }
```

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Hence, the present disclosure provides a system and method for large language model based automated test input generation for web applications. The embodiment of present disclosure herein addresses unresolved problem of the automated generation of test data from preliminary documents which includes user manuals, frequently asked questions (FAQ) documents, user stories, user requirement documents and the like. The embodiment thus provides a system to generate test data which can be used for testing the given web application. Moreover, the embodiments herein include the test data selector for assigning ranking to the one or more test data and select the test data with highest ranking based on the result of execution of test data of each program on all the validators of same context set. The present disclosure further includes the static refinement engine which calls the mathematical library function on the highest ranked one or more test data to generate structural information and modify the language of the second set of prompts passed to the Large Language Model (LLM) 210 based on the structural information generated. The present disclosure further includes the dynamic refinement engine which refines the generated program by passing feedback generated by executing the highest ranked one or more test data on a web application and refining the response obtained.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:
receiving, via one or more hardware processors, a plurality of textual documents and extracting context related to each field comprised in the plurality of textual documents (302);
rephrasing, via the one or more hardware processors, the extracted context (304) by:
(i) implementing a plurality of rules to obtain a rephrased context having a meaning identical to the extracted context; and
(ii) passing each extracted context along with a first set of prompts to a Large Language Model (LLM) to obtain a set of rephrased contexts having a meaning identical to the extracted context;
generating, via the one or more hardware processors, a program, a validator and a first set of constraints for each extracted context, the rephrased context and the set of rephrased contexts by passing a second set of prompts to the Large Language Model (LLM) (306);
generating, via the one or more hardware processors, one or more test data by running the generated program (308);
assigning, via the one or more hardware processors, ranking to the one or more test data, wherein the ranking is assigned based on a number of validators which are successfully validated and selecting the one or more test data with highest ranking (310);
statically refining, via the one or more hardware processors, the generated program using a static refinement engine (312) by:
(i) calling a mathematical library function on the highest ranked one or more test data to generate structural information pertaining to the highest ranked one or more test data for the Large Language Model (LLM); and
(ii) modifying language of the second set of prompts passed to the Large Language Model (LLM) based on the structural information generated;
executing, via one or more hardware processors, the highest ranked one or more test data on a web application and receiving feedback from the web application (314); and
dynamically refining, via the one or more hardware processors, each generated program using a dynamic refinement engine (316) by:
(i) passing the feedback to the Large Language Model (LLM) with a third set of prompts, wherein the Large Language Model (LLM) takes content from the feedback and provides:
a) a response if there is an error message;
b) a field corresponding to the error message; and
c) type of a second set of constraints being violated in the error message; and
(ii) refining the program for the field corresponding to the error message dynamically based on the error message received from the feedback by comparing the first set of constraints with the second set of constraints using the dynamic refinement engine.

2. The processor implemented method as claimed in claim 1, wherein the first set of constraints, the program, the validator and the one or more test data with the corresponding ranks are provided as inputs to the static refinement engine.

3. The processor implemented method as claimed in claim 1, wherein the step of refining each generated program statically further comprises updating the second set of prompts and passing the updated second set of prompts to the Large Language Model (LLM) to fix an error in the generated program using an output of the mathematical library function.

4. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a plurality of textual documents and extracting context related to each field comprised in the plurality of textual documents;
rephrasing, via the one or more hardware processors, the extracted context by:
(i) implementing a plurality of rules to obtain a rephrased context having a meaning identical to the extracted context; and
(ii) passing each extracted context along with a first set of prompts to a Large Language Model (LLM) to obtain a set of rephrased contexts having a meaning identical to the extracted context;
generate a program, a validator and a first set of constraints for each extracted context, the rephrased context and the set of rephrased contexts by passing a second set of prompts to the Large Language Model (LLM);
generate one or more test data by running the generated program;
assign ranking to the one or more test data, wherein the ranking is assigned based on a number of validators which are successfully validated and selecting the one or more test data with highest ranking;
statically refine the generated program using a static refinement engine by:
(i) calling a mathematical library function on the highest ranked one or more test data to generate structural information pertaining to the highest ranked one or more test data for the Large Language Model (LLM); and
(ii) modifying language of the second set of prompts passed to the Large Language Model (LLM) based on the structural information generated;
execute the highest ranked one or more test data on a web application and receiving feedback from the web application; and
dynamically refine each generated program using a dynamic refinement engine by:
(i) passing the feedback to the Large Language Model (LLM) with a third set of prompts, wherein the Large Language Model (LLM) takes content from the feedback and provides:
a) a response if there is an error message;
b) a field corresponding to the error message; and
c) type of a second set of constraints being violated in the error message; and
(ii) refining the program for the field corresponding to the error message dynamically based on the error message received from the feedback by comparing the first set of constraints with the second set of constraints using the dynamic refinement engine.

5. The system as claimed in claim 4, wherein the first set of constraints, the program, the validator and the one or more test data with the corresponding ranks are provided as inputs to the static refinement engine.

6. The system as claimed in claim 4, wherein the step of refining each generated program statically further comprises updating the second set of prompts and passing the updated second set of prompts to the Large Language Model (LLM) to fix an error in the generated program using an output of the mathematical library function.

7. One or more non-transitory machine-readable information storage mediums comprising one or more instructions which when executed by one or more hardware processors cause:
receiving a plurality of textual documents and extracting context related to each field comprised in the plurality of textual documents;
rephrasing the extracted context by:
(i) implementing a plurality of rules to obtain a rephrased context having a meaning identical to the extracted context; and
(ii) passing each extracted context along with a first set of prompts to a Large Language Model (LLM) to obtain a set of rephrased contexts having a meaning identical to the extracted context;
generating a program, a validator and a first set of constraints for each extracted context, the rephrased context and the set of rephrased contexts by passing a second set of prompts to the Large Language Model (LLM) ;
generating one or more test data by running the generated program ;
assigning ranking to the one or more test data, wherein the ranking is assigned based on a number of validators which are successfully validated and selecting the one or more test data with highest ranking ;
statically refining the generated program using a static refinement engine by:
(i) calling a mathematical library function on the highest ranked one or more test data to generate structural information pertaining to the highest ranked one or more test data for the Large Language Model (LLM); and
(ii) modifying language of the second set of prompts passed to the Large Language Model (LLM) based on the structural information generated;
executing the highest ranked one or more test data on a web application and receiving feedback from the web application; and
dynamically refining each generated program using a dynamic refinement engine by:
(i) passing the feedback to the Large Language Model (LLM) with a third set of prompts, wherein the Large Language Model (LLM) takes content from the feedback and provides:
a) a response if there is an error message;
b) a field corresponding to the error message; and
c) type of a second set of constraints being violated in the error message; and
(ii) refining the program for the field corresponding to the error message dynamically based on the error message received from the feedback by comparing the first set of constraints with the second set of constraints using the dynamic refinement engine.

8. The one or more non-transitory machine-readable information storage mediums as claimed in claim 7, wherein the first set of constraints, the program, the validator and the one or more test data with the corresponding ranks are provided as inputs to the static refinement engine.

9. The one or more non-transitory machine-readable information storage mediums as claimed in claim 7, wherein the step of refining each generated program statically further comprises updating the second set of prompts and passing the updated second set of prompts to the Large Language Model (LLM) to fix an error in the generated program using an output of the mathematical library function.
